# EUROPEAN PATENT APPLICATION

(11) **EP 4 080 620 A1**
(43) Date of publication of application: **26.10.2022**
(21) Application number: 19956775.1
(22) Date of filing: 20.12.2019
(51) Int. Cl.: H01M 4/66, H01M 4/13, C25D 5/12, C23C 28/00, H01M 4/02

(54) **SURFACE-TREATED COPPER FOIL, METHOD FOR PRODUCING SAME, AND NEGATIVE ELECTRODE FOR SECONDARY BATTERY INCLUDING SAME**

(30) Priority: 19.12.2019 KR 20190170663
(71) Applicant: Iljin Materials Co., Ltd., Iksan-si, Jeollabuk-do 54586 (KR)
(72) Inventor: YOON, Sang Hwa, Iksan-si, Jeollabuk-do 54586 (KR); SEO, Jung Woo, Iksan-si, Jeollabuk-do 54586 (KR); CHOI, Eun Sil, Iksan-si, Jeollabuk-do 54586 (KR); RYU, Young Ho, Iksan-si, Jeollabuk-do 54586 (KR); KIM, Hyung Cheol, Iksan-si, Jeollabuk-do 54586 (KR); BEOM, Won Jin, Iksan-si, Jeollabuk-do 54586 (KR); SONG, KI Deok, Iksan-si, Jeollabuk-do 54586 (KR); YANG, Chang Yol, Iksan-si, Jeollabuk-do 54586 (KR)
(74) Representative: HGF
(86) International application number: PCT/KR2019/018231
(87) International publication number: WO 2021/125410

(57) **Abstract**

Disclosed herein are a surface-treated copper foil for a negative electrode current collector for secondary batteries, a method for producing the same, and a negative electrode for secondary batteries including the same. The surface-treated copper foil includes needle-shaped copper particles formed on at least one surface thereof, wherein the copper particles have an average major-axis length of about 0.6 µm to about 2.0 µm and are separated from one another by a distance of about 1 µm to about 5 µm.

## Description

### [Technical Field]

The present invention relates to a surface-treated copper foil, a method for producing the same, and a negative electrode for secondary batteries including the same and, more specifically, to a surface-treated copper foil which has low interfacial resistance with a negative electrode active material and good adhesive strength to the negative electrode active material, a method for producing the same, and a negative electrode for secondary batteries including the same.

### [Background Art]

A secondary battery is an energy conversion device that stores electrical energy in the form of chemical energy and then generates electricity through reconversion of the stored energy into electrical energy upon demand. Among these secondary batteries, lithium secondary batteries are currently widely used due to high operating voltage, high energy density, and good lifespan characteristics thereof.

A lithium secondary battery consists of a positive electrode, a negative electrode, a separator, and an electrolyte. The positive electrode is formed of a positive electrode current collector coated with a positive electrode active material layer, and the negative electrode is formed of a negative electrode current collector coated with a negative electrode active material layer. As the negative electrode current collector, electrolytic copper foil is commonly used. Since the negative electrode includes two different materials contacting each other, that is, the current collector and the active material, interfacial resistance occurs at the negative electrode. High interfacial resistance causes reduction in charging/discharging capacity and thus reduction in cell efficiency.

The active material can partially peel off of the current collector due to deterioration or swelling of the secondary battery or external impact. Specifically, deterioration or swelling of the secondary battery or physical force such as external impact weakens adhesion of the active material to the surface of the current collector, causing formation of a gap between the current collector and the active material. As a result, a surface area along which current and electrons will move decreases, causing the current and electrons to be concentrated at a specific point, which results in increase in internal resistance of the negative electrode.

### [Disclosure]

### [Technical Problem]

It is an aspect of the present invention to provide a surface-treated copper foil having low interfacial resistance with a negative electrode active material, a method for producing the same, and a negative electrode for secondary batteries including the same.

It is another aspect of the present invention to provide a surface-treated copper foil having good adhesive strength to a negative electrode active material, a method for producing the same, and a negative electrode for secondary batteries including the same.

### [Technical Solution]

1. In accordance with one aspect of the present invention, there is provided a surface-treated copper foil for a negative electrode current collector for secondary batteries. The surface-treated copper foil includes needle-shaped copper particles formed on at least one surface thereof, wherein the copper particles have an average major-axis length of about 0.6 µm to about 2.0 µm and are separated from one another by a distance of about 1 µm to about 5 µm.
2. In embodiment 1, the copper particles may have an aspect ratio of about 1.5 to about 10.
3. In embodiment 1 or 2, the surface-treated copper foil may have a thickness of about 1 µm to about 100 µm.
4. In any one of embodiments 1 to 3, the surface-treated copper foil may have about 10% or more lower interfacial resistance than untreated copper foil.
5. In any one of embodiments 1 to 4, the surface-treated copper foil may have an interfacial resistance of about 0.0025 ohm/m² to about 0.0032 ohm/m².
6. In any one of embodiments 1 to 5, the surface-treated copper foil may have about 20% or more greater adhesive strength than an untreated copper foil.
7. In any one of embodiments 1 to 6, the surface-treated copper foil may have an adhesive strength of about 3 gf/mm to about 5 gf/mm.
8. In any one of embodiments 1 to 7, the surface-treated copper foil may further include an antirust layer covering the copper particles, wherein the antirust layer may include an inorganic antirust layer, an organic antirust layer, or a combination thereof.
9. In embodiment 8, the inorganic antirust layer may include chromium (Cr), nickel (Ni), cobalt (Co), or an alloy or combination thereof, and the organic antirust layer may include an azole compound, a silane compound, or a combination thereof.
10. In accordance with another aspect of the present invention, there is provided a method for producing the surface-treated copper foil according to any one of embodiments 1 to 9. The method includes: performing primary plating by immersing a copper foil in a primary electrolyte containing about 5 g/L to about 15 g/L of a nickel salt and about 5 g/L to about 20 g/L of a copper salt, followed by electrolysis at a liquid temperature of about 25°C to about 45°C and a current density of about 1 A/dm² to about 5 A/dm² for about 1 to 5 seconds; and performing secondary plating by immersing the primarily plated copper foil in a secondary electrolyte containing about 40 g/L to about 70 g/L of a copper salt and about 100 g/L to about 150 g/L of sulfuric acid, followed by electrolysis at a liquid temperature of about 25°C to about 45°C and a current density of about 10 A/dm² to about 20 A/dm² for about 1 to 5 seconds.
11. In accordance with a further aspect of the present invention, there is provided a negative electrode for secondary batteries. The negative electrode includes: the surface-treated copper foil according to any one of embodiments 1 to 9 or the surface-treated copper foil produced by the method according to embodiment 10; and a negative electrode active material coated on the surface-treated copper foil.
12. In embodiment 11, the negative electrode active material may include carbon, a metal, a metal oxide, a metal carbide, or a combination thereof.

### [Advantageous Effects]

The present invention provides a surface-treated copper foil having low interfacial resistance with a negative electrode active material and good adhesive strength to the negative electrode active material, a method for producing the same, and a negative electrode for secondary batteries including the same.

### [Description of Drawings]

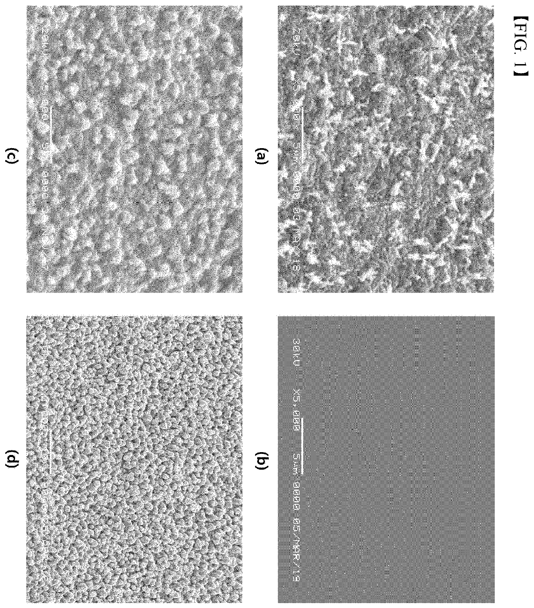

FIG. 1(a) to FIG. 1(d) are SEM images of surface-treated copper foils fabricated in Example 1, Comparative Example 1, Comparative Example 2, and Comparative Example 3, respectively.

### [Best Mode]

As used herein, the singular forms, "a," "an," and "the", are intended to include the plural forms as well, unless the context clearly indicates otherwise.

Like components will be denoted by like reference numerals throughout the specification. In addition, description of known functions and constructions which may unnecessarily obscure the subject matter of the present invention will be omitted.

It will be understood that, when an element is referred to as being located "on", "above", "below", or "beside" another element, one or more intervening elements may be present between the two elements unless such terms are preceded by "directly".

It will be further understood that the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

As used herein, a numerical value related to a certain component is construed to include a tolerance range in interpretation of components, unless clearly stated otherwise.

As used herein to represent a specific numerical range, the expression "a to b" means "greater than or equal to a and less than or equal to b (a≤ and ≤b)".

As used herein, the term "aspect ratio" may refer to a ratio of the longest diameter of a copper particle to a shortest diameter of the copper particle in sectional view (major-axis length/minor-axis length or length/width). The longest diameter of the copper particle is referred to as a "major-axis length" and the shortest diameter of the copper particle is referred to as a "minor-axis length".

As used herein, "distance between copper particles" refers to the shortest distance between copper particles.

As used herein, "interfacial resistance" refers to a value obtained through a process in which negative electrode active material slurry prepared by mixing 6 g of artificial graphite with 6.3 g of carboxymethyl cellulose (CMC) (2% aqueous solution), 0.32 g of styrene-butadiene rubber (SBR), and 1 ml of distilled water is coated to a thickness of 60 µm to 80 µm on a surface-treated copper foil (15 cm×15 cm) using a doctor blade and then is dried at 130°C for 1 hour, followed by measurement of interfacial resistance of the prepared specimen under conditions of current: 10 mA, speed: normal, and voltage range: 0.5 V using an interfacial resistance measurement device.

As used herein, "adhesive strength" refers to a value obtained through a process in which a negative electrode active material is coated onto a surface-treated copper foil and is dried in the same manner as in measurement of the interfacial resistance, and then a double-sided tape is attached to a surface of the surface-treated copper foil coated with the negative electrode active material, followed by measurement of peel strength of the prepared specimen at a peel angle of 90° using a tensile tester.

After intense research on a copper foil for a negative electrode current collector capable of increasing charging/discharging efficiency of a secondary battery, the inventors of the present invention completed the present invention based on confirmation that, when a negative electrode current collector for secondary batteries is formed of a surface-treated copper foil including needle-shaped copper particles on at least one surface thereof, wherein the copper particles have an average major-axis length of about 0.6 µm to about 2.0 µm (for example, about 0.6 µm, about 0.7 µm, about 0.8 µm, about 0.9 µm, about 1.0 µm, about 1.1 µm, about 1.2 µm, about 1.3 µm, about 1.4 µm, about 1.5 µm, about 1.6 µm, about 1.7 µm, about 1.8 µm, about 1.9 µm, or about 2.0 µm) and are separated from one another by a distance of about 1 µm to about 5 µm (for example, about 1.1 µm, about 1.2 µm, about 1.3 µm, about 1.4 µm, about 1.5 µm, about 1.6 µm, about 1.7 µm, about 1.8 µm, about 1.9 µm, about 2 µm, about 2.1 µm about 2.2 µm, about 2.3 µm, about 2.4 µm, about 2.5 µm, about 2.6 µm, about 2.7 µm, about 2.8 µm, about 2.9 µm, about 3 µm, about 3.1 µm, about 3.2 µm, about 3.3 µm, about 3.4 µm, about 3.5 µm, about 3.6 µm, about 3.7 µm, about 3.8 µm, about 3.9 µm, about 4 µm, about 4.1 µm, about 4.2 µm, about 4.3 µm, about 4.4 µm, about 4.5 µm, about 4.6 µm, about 4.7 µm, about 4.8 µm, about 4.9 µm, or about 5 µm), it is possible to achieve low interfacial resistance with a negative electrode active material and high adhesive strength to the negative electrode active material since the needle-shaped copper particles can better cover the negative electrode active material than spherical or polygonal copper particles. In one embodiment, the needle-shaped copper particles may have an average major-axis length of about 0.7 µm to about 1.6 µm (for example, about 0.7 µm to about 1.5 µm) and may be separated from one another by a distance of about 1 µm to about 4.5 µm (for example, about 1.2 µm to about 4.1 µm), without being limited thereto.

Although a method of forming the needle-shaped copper particles on the surface of the copper foil is not particularly restricted, the needle-shaped copper particles may be formed, for example, by electroplating the copper foil twice. A primary electrolyte may be an aqueous solution containing about 5 g/L to about 15 g/L (for example, about 5 g/L, about 6 g/L, about 7 g/L, about 8 g/L, about 9 g/L, about 10 g/L, about 11 g/L, about 12 g/L, about 13 g/L, about 14 g/L, or about 15 g/L, as another example, about 8 g/L to about 14 g/L) of a nickel salt and about 5 g/L to about 20 g/L (for example, about 5 g/L, about 6 g/L, about 7 g/L, about 8 g/L, about 9 g/L, about 10 g/L, about 11 g/L, about 12 g/L, about 13 g/L, about 14 g/L, about 15 g/L, about 16 g/L, about 17 g/L, about 18 g/L, about 19 g/L, or about 20 g/L, as another example, 10 g/L to 17 g/L) of a copper salt and having a pH adjusted to about 1 to about 5 (for example, about 1, about 2, about 3, about 4, or about 5, as another example, about 2 to about 4). Within these ranges, seeds for the needle-shaped copper particles can be smoothly formed. A secondary electrolyte may be an aqueous solution containing about 40 g/L to about 70 g/L (for example, about 40 g/L, about 45 g/L, about 50 g/L, about 55 g/L, about 60 g/L, about 65 g/L, or about 70 g/L, as another example, about 45 g/L to about 60 g/L) of a copper salt and about 100 g/L to about 150 g/L (for example, about 100 g/L, about 105 g/L, about 110 g/L, about 115 g/L, about 120 g/L, about 125 g/L, about 130 g/L, about 135 g/L, about 140 g/L, about 145 g/L, or about 150 g/L, as another example, about 120 g/L to about 140 g/L) of sulfuric acid. Within these ranges, the needle-shaped copper particles can be well formed on the seeds. Examples of the nickel salt may include nickel sulfate, nickel nitrate, nickel chloride, and nickel acetate, without being limited thereto. These may be used alone or as a mixture thereof. Examples of the copper salt may include copper sulfate, copper nitrate, copper chloride, and copper acetate, without being limited thereto. These may be used alone or as a mixture thereof. Primary electroplating may be performed, for example, by immersing an insoluble electrode as a positive electrode and an untreated copper foil as a negative electrode in the primary electrolyte, followed by electrolysis at a liquid temperature of about 25°C to about 45°C (for example, about 25°C, about 30°C, about 35°C, about 40°C, or about 45°C) and a current density of about 1 A/dm² to about 5 A/dm² (for example, about 1 A/dm², about 2 A/dm², about 3 A/dm², about 4 A/dm², or about 5 A/dm²) for about 1 to 5 seconds (for example, about 1 second, about 2 seconds, about 3 seconds, about 4 seconds, or about 5 seconds), without being limited thereto. Secondary electroplating may be performed, for example, by immersing an insoluble electrode as a positive electrode and the primarily electroplated copper foil as a negative electrode in the secondary electrolyte, followed by electrolysis at a liquid temperature of about 25°C to about 45°C (for example, about 25°C, about 30°C, about 35°C, about 40°C, or about 45°C) and a current density of about 10 A/dm² to about 20 A/dm² (for example, about 10 A/dm², about 11 A/dm², about 12 A/dm², about 13 A/dm², about 14 A/dm², about 15 A/dm², about 16 A/dm², about 17 A/dm², about 18 A/dm², about 19 A/dm², or about 20 A/dm²) for about 1 to 5 seconds (for example, about 1 second, about 2 seconds, about 3 seconds, about 4 seconds, or about 5 seconds), without being limited thereto.

In one embodiment, the needle-shaped copper particles may have an aspect ratio of about 1.5 to about 10 (for example, about 1.5, about 2, about 2.5, about 3, about 3.5, about 4, about 4.5, about 5, about 5.5, about 6, about 6.5, about 7, about 7.5, about 8, about 8.5, about 9, about 9.5, or about 10). Within this range, the needle-shaped copper particles can have low interfacial resistance with a negative electrode active material and good adhesive strength to the negative electrode active material. For example, the needle-shaped copper particles may have an aspect ratio of about 1.5 to about 7 or about 2 to about 5, without being limited thereto.

In one embodiment, the needle-shaped copper particles may have a minor-axis length of about 0.2 µm to about 0.6 µm (for example, about 0.2 µm, about 0.3 µm, about 0.4 µm, about 0.5 µm, or about 0.6 µm). Within this range, the needle-shaped copper particles can have low interfacial resistance with a negative electrode active material and good adhesive strength to the negative electrode active material. For example, the needle-shaped type copper particles may have a minor-axis length of about 0.3 µm to about 0.5 µm, without being limited thereto.

In one embodiment, the surface-treated copper foil may have a thickness of about 1 µm to about 100 µm. Within this range, the surface-treated copper foil can be suitable for use as a negative electrode current collector. For example, the surface-treated copper foil may have a thickness of about 3 µm to about 80 µm or about 5 µm to about 60 µm, without being limited thereto.

In one embodiment, the surface-treated copper foil may have about 10% or more lower interfacial resistance than the untreated copper foil. For example, the surface-treated copper foil may have about 10% to about 100% (for example, about 10%, about 20%, about 30%, about 40%, about 50%, about 60%, about 70%, about 80%, about 90%, or about 100%) or about 10% to about 30% lower interfacial resistance than the untreated copper foil, without being limited thereto.

In one embodiment, the surface-treated copper foil may have an interfacial resistance of 0.0025 ohm/m² to 0.0032 ohm/m² (for example, about 0.0025 ohm/m², about 0.0026 ohm/m², about 0.0027 ohm/m², about 0.0028 ohm/m², about 0.0029 ohm/m², about 0.0030 ohm/m², about 0.0031 ohm/m², or about 0.0032 ohm/m²). For example, the surface-treated copper foil may have an interfacial resistance of about 0.0025 ohm/m² to about 0.0031 ohm/m² or about 0.0027 ohm/m² to about 0.0031 ohm/m², without being limited thereto.

In one embodiment, the surface-treated copper foil may have about 20% or more greater adhesive strength than the untreated copper foil. For example, the surface-treated copper foil may have about 20% to about 100% (for example, about 20%, about 30%, about 40%, about 50%, about 60%, about 70%, about 80%, about 90%, or about 100%) or about 20% to about 50% greater adhesive strength than the untreated copper foil, without being limited thereto.

In one embodiment, the surface-treated copper foil may have an adhesive strength of about 3 gf/mm to about 5 gf/mm (for example, about 3 gf/mm, about 3.1 gf/mm, about 3.2 gf/mm, about 3.3 gf/mm, about 3.4 gf/mm, about 3.5 gf/mm, about 3.6 gf/mm, about 3.7 gf/mm, about 3.8 gf/mm, about 3.9 gf/mm, about 4 gf/mm, about 4.1 gf/mm, about 4.2 gf/mm, about 4.3 gf/mm, about 4.4 gf/mm, about 4.5 gf/mm, about 4.6 gf/mm, about 4.7 gf/mm, about 4.8 gf/mm, about 4.9 gf/mm, or about 5 gf/mm). For example, the surface-treated copper foil may have an adhesive strength of about 3 gf/mm to about 4.5 gf/mm or about 3 gf/mm to about 4 gf/mm, without being limited thereto.

In one embodiment, the surface-treated copper foil may further include an antirust layer covering the needle-shaped copper particles. The antirust layer may include an inorganic antirust layer, an organic antirust layer, or a combination thereof. The number of antirust layers is not particularly restricted. The inorganic antirust layer may include, for example, chromium (Cr), nickel (Ni), cobalt (Co), or an alloy or combination thereof. The organic antirust layer may include an azole compound (for example, a benzotriazole compound), a silane compound, or a combination thereof. In one embodiment, the antirust layer may include a chromate-based antirust layer, which may be formed, for example, by treatment with a liquid containing chromic anhydride, chromic acid, dichromic acid, chromate, dichromate, or a combination thereof, without being limited thereto.

The surface-treated copper foil may be used as a negative electrode current collector for secondary batteries. The surface-treated copper foil used as the negative electrode current collector can exhibit low interfacial resistance with a negative electrode active material and good adhesive strength to the negative electrode active material.

In accordance with another aspect of the present invention, there is provided a negative electrode for secondary batteries. The negative electrode may be fabricated by coating the surface-treated copper foil set forth above with a negative electrode active material.

The negative electrode active material may include any known negative electrode active material without limitation. For example, the negative electrode active material may include carbon (for example, artificial graphite, natural graphite, and the like), a metal powder (for example, lithium powder, tin powder, silicon powder, and the like), a metal oxide (for example, tin oxide, silicon oxide, and the like), a metal carbide (for example, silicon carbide and the like), or a combination thereof.

In accordance with a further aspect of the present invention, there is provided a secondary battery including the negative electrode for secondary batteries set forth above.

Next, the present invention will be described in more detail with reference to some examples. It should be understood that these examples are provided for illustration only and are not to be in any way construed as limiting the present invention.

### EXAMPLE

### Example 1

An 8 µm thick copper foil (ILJIN Materials Co., Ltd.) was subjected to primary plating by immersing the copper foil in a primary electrolyte containing 10 g/L of nickel sulfate and 10 g/L of copper sulfate, followed by electrolysis at a liquid temperature of 30°C, a pH of 2.5, and a current density of 2 A/dm² for 3 seconds. Then, the resulting copper foil was subjected to secondary plating by immersing the copper foil in a secondary electrolyte containing 65 g/L of copper sulfate and 120 g/L of sulfuric acid, followed by electrolysis at a liquid temperature of 30°C and a current density of 14 A/dm² for 3 seconds. Thereafter, a surface-treated copper foil was fabricated by forming an antirust layer through a process in which the resulting copper foil was immersed in an aqueous solution containing 2 g/L of chromic acid at 30°C for 3 seconds, followed by washing with water.

### Example 2

A surface-treated copper foil was fabricated in the same manner as in Example 1 except that the amount of nickel sulfate used in primary plating was changed to 11 g/L.

### Example 3

A surface-treated copper foil was fabricated in the same manner as in Example 1 except that the amount of nickel sulfate used in primary plating was changed to 12 g/L.

### Example 4

A surface-treated copper foil was fabricated in the same manner as in Example 1 except that the amount of nickel sulfate used in primary plating was changed to 13 g/L.

### Comparative Example 1

A surface-treated copper foil was fabricated in the same manner as in Example 1 except that primary electroplating and secondary electroplating were omitted.

### Comparative Example 2

A surface-treated copper foil was fabricated in the same manner as in Example 1 except that the amount of copper sulfate used in primary plating was changed to 30 g/L.

### Comparative Example 3

A surface-treated copper foil was fabricated in the same manner as in Example 1 except that nickel sulfate was not used in primary plating.

Each of the surface-treated copper foils fabricated in Examples and Comparative Examples was evaluated as to the following properties. Results are shown in Table 1.

### Property evaluation

(1) Average major-axis length of copper particles (unit: µm) and average distance between copper particles (unit: µm): A surface image of each of the surface-treated copper foils fabricated in Examples and Comparative Examples was acquired using a scanning electron microscope at 5,000× magnification, and then major-axis lengths of 50 copper particles within an area of 100 µm×100 µm and distances between the copper particles were measured, followed by averaging the measured values.
(2) Interfacial resistance (unit: ohm/m²): A negative electrode active material slurry prepared by mixing 6 g of artificial graphite (MAG-D, Hitachi Chemical Co., Ltd.) with 6.3 g of carboxymethyl cellulose (CMC) (2% aqueous solution), 0.32 g of styrene-butadiene rubber (SBR), and 1 ml of distilled water was coated to a thickness of 60 µm to 80 µm on each of the surface-treated copper foils (15 cm×15 cm) fabricated in Examples and Comparative Examples using a doctor blade (Micrometer Adjustable Film Applicator, Welcos Co., Ltd.) and then was dried at 130°C for 1 hour, followed by measurement of interfacial resistance of the prepared specimen under conditions of current: 10 mA, speed: normal, and voltage range: 0.5 V using an interfacial resistance measurement device (XF057, Hioki Electric Co., Ltd. ).
(3) Adhesive strength (unit: gf/mm): A negative electrode active material was coated onto each of the surface-treated copper foils fabricated in Examples and Comparative Examples and then was dried in the same manner as in measurement of the interfacial resistance. Then, a double-sided tape was attached to a surface of the surface-treated copper foil coated with the negative electrode active material to prepare a tensile specimen having a size of 30 mm×70 mm (width×length), followed by measurement of peel strength of the specimen at a peel angle of 90° and a peel rate of 50.8 mm/min using a tensile tester.

**Table 1**

| | Average major-axis length of copper particles (µm) | Average distance between copper particles (µm) | Shape of copper particles | Interfacial resistance (ohm/m²) | Adhesive strength (gf/mm) |
|---|---|---|---|---|---|
| Example 1 | 0.75 | 1.20 | Needle shape | 0.002939 | 3.10 |
| Example 2 | 1.25 | 4.10 | Needle shape | 0.003021 | 3.22 |
| Example 3 | 0.91 | 2.75 | Needle shape | 0.002957 | 3.14 |
| Example 4 | 1.48 | 3.70 | Needle shape | 0.003012 | 3.52 |
| Comparative Example 1 | - | - | - | 0.003542 | 2.37 |
| Comparative Example 2 | 1.72 | 1.12 | Polygonal shape | 0.003353 | 2.12 |
| Comparative Example 3 | 2.4 | 0.02 | Circular shape | 0.003745 | 2.45 |

From the results shown in Table 1, it can be seen that the surface-treated copper foils of Examples 1 to 4, in which the shape of copper particles, the average major-axis length of copper particles, and the average distance of copper particles met the requirements according to the present invention, exhibited lower interfacial resistance and higher adhesive strength than the surface-treated copper foils of Comparative Examples 1 to 3. Therefore, it can be seen that the surface-treated copper foil according to the present invention is particularly suitable for use as a negative electrode current collector for secondary batteries.

Although some embodiments have been described herein, it should be understood that the present invention is not limited to the following embodiments and may be embodied in different ways and that various modifications, changes, alterations, and equivalent embodiments can be made by those skilled in the art without departing from the spirit and scope of the invention. Therefore, it should be understood that these embodiments are provided for illustration only and are not to be construed in any way as limiting the present invention.

## Claims

1. A surface-treated copper foil for a negative electrode current collector for secondary batteries, the surface-treated copper foil comprising needle-shaped copper particles formed on at least one surface thereof,
wherein the copper particles have an average major-axis length of about 0.6 µm to about 2.0 µm and are separated from one another by a distance of about 1 µm to about 5 µm.

2. The surface-treated copper foil according to claim 1, wherein the copper particles have an aspect ratio of about 1.5 to about 10.

3. The surface-treated copper foil according to claim 1 or 2, wherein the surface-treated copper foil has a thickness of about 1 µm to about 100 µm.

4. The surface-treated copper foil according to any one of claims 1 to 3, wherein the surface-treated copper foil has about 10% or more lower interfacial resistance than untreated copper foil.

5. The surface-treated copper foil according to any one of claims 1 to 4, wherein the surface-treated copper foil has an interfacial resistance of about 0.0025 ohm/m² to about 0.0032 ohm/m².

6. The surface-treated copper foil according to any one of claims 1 to 5, wherein the surface-treated copper foil has about 20% or more greater adhesive strength than untreated copper foil.

7. The surface-treated copper foil according to any one of claims 1 to 6, wherein the surface-treated copper foil has an adhesive strength of about 3 gf/mm to about 5 gf/mm.

8. The surface-treated copper foil according to any one of claims 1 to 7, further comprising:
an antirust layer covering the copper particles, the antirust layer comprising an inorganic antirust layer, an organic antirust layer, or a combination thereof.

9. The surface-treated copper foil according to claim 8, wherein the inorganic antirust layer comprises chromium (Cr), nickel (Ni), cobalt (Co), or an alloy or combination thereof, and the organic antirust layer comprises an azole compound, a silane compound, or a combination thereof.

10. A method for producing the surface-treated copper foil according to any one of claims 1 to 9, the method comprising:
performing primary plating by immersing a copper foil in a primary electrolyte containing about 5 g/L to about 15 g/L of a nickel salt and about 5 g/L to about 20 g/L of a copper salt, followed by electrolysis at a liquid temperature of about 25°C to about 45°C and a current density of about 1 A/dm² to about 5 A/dm² for about 1 to 5 seconds; and
performing secondary plating by immersing the primarily plated copper foil in a secondary electrolyte containing about 40 g/L to about 70 g/L of a copper salt and about 100 g/L to about 150 g/L of sulfuric acid, followed by electrolysis at a liquid temperature of about 25°C to about 45°C and a current density of about 10 A/dm² to about 20 A/dm² for about 1 to 5 seconds.

11. A negative electrode for secondary batteries, comprising:
the surface-treated copper foil according to any one of claims 1 to 9; and
a negative electrode active material coated on the surface-treated copper foil.

12. The negative electrode according to claim 11, wherein the negative electrode active material comprises carbon, a metal, a metal oxide, a metal carbide, or a combination thereof.
